# EUROPEAN PATENT APPLICATION

(11) **EP 3 952 613 A1**
(43) Date of publication of application: **09.02.2022**
(21) Application number: 21275108.5
(22) Date of filing: 09.08.2021
(51) Int. Cl.: H05B 45/10, H05B 47/115, H05B 47/13

(54) **APPARATUS AND METHOD**

(30) Priority: 07.08.2020 GB 202012314
(71) Applicant: Ansell Electrical Products Limited, Warrington Cheshire WA3 3JD (GB)
(72) Inventor: Taylor, Craig, Warrington WA3 3JD (GB); Ho, Helen, Warrington WA3 3JD (GB)
(74) Representative: Murgitroyd & Company

(57) **Abstract**

A light emitting diode (LED) device provides a "corridor" function by emitting a low level of light at all times and a higher level of illumination when the presence of a person is detected. The device comprises a light source with an LED module and an occupancy sensor. The light source emits light at a constant level at all times. The occupancy sensor is configured to be electrically connected to at least one LED driver which is in turn electrically connected to at least one LED luminaire. The occupancy sensor is thereby configured to control the at least one LED luminaire in use. The light emitted by the at least one LED luminaire is brighter than the light emitted by the LED module of the light source.

## Description

The present invention relates to light emitting diode (LED) lighting. More particularly, the invention relates to a combined LED and sensor device or circuit with low level lighting functionality during absence.

### BACKGROUND OF THE INVENTION

In residential and commercial buildings, it is known to use LED luminaires with an integral low level lighting functionality during absence, particularly in areas that do not have natural light, and where for safety reasons lighting at all times is highly preferable. When motion or the presence of a person is detected the LED module of the luminaire is illuminated at 100% of its brightness, then after a pre-set time period the module reduces in brightness to a lower level, for example, 10%. In some cases, the LED module stays at the reduced output illumination for a set period of time and then switches off entirely. In other cases, the luminaire remains lit at this low level, never turning off. In either case, this dimming/switching functionality offers cost and energy savings in comparison to maintaining the lighting at 100% at all times.

At present, the low level lighting functionality is achieved by using an LED module with a separate sensor, for example a microwave sensor (MWS) or passive infrared sensor (PIR), and a driver that has an additional switched line for the sensor trigger to increase the output of the LED module to 100% when activated, and down to e.g. 10% when deactivated. However, the LED driver must be built specifically for the purpose of providing a corridor function. In other words, the LED driver is dedicated and has a dimming capability, or variable outputs, that result in the component being more expensive than more general LED drivers. Additionally, at all levels of illumination of the LED module, the entire LED module is illuminated. This increases the costs for components in order to achieve the overall illumination of the module.

### SUMMARY OF THE INVENTION

According to the present invention, there is provided a light emitting diode (LED) device comprising:
at least one light source comprising an LED module; and
an occupancy sensor;
wherein, in use, the light source emits light at a constant level at all times; and
wherein the occupancy sensor is configured to be electrically connected to at least one LED driver which is in turn electrically connected to at least one LED luminaire, and the occupancy sensor is thereby configured to control the at least one LED luminaire in use; and
wherein the light emitted by the at least one LED luminaire is brighter than the light emitted by the LED module.

Optionally the light emitting diode device may comprise a single LED, or optionally may comprise a plurality of LEDs connected in a circuit.

The light source in the LED device can provide a low level lighting functionality during absence of e.g. users, operators, residents or other people for locations that do not see natural lighting, for example corridors in office or tower blocks. The light source is powered at all times and is therefore on, at a relatively low level of light emission, at all times. Rather than having one LED luminaire varying between 100% and 10-30% illumination, as is conventional, the light source can consistently provide e.g. 5-50%, e.g. 10% of the LED luminaire's equivalent output at all times, and the LED luminaire is only illuminated when the occupancy sensor is triggered, reducing the cost of operation.

Advantageously, the present invention is capable of being retrofitted into existing light fixtures without requiring an LED driver that is purpose built to provide a dimming capability. For example, the LED device is an add-on device that can be fitted into pre-existing/pre-installed LED luminaires as detailed below. The LED luminaires may comprise sufficient space in which the LED device can be fitted. Alternatively, or additionally, the LED luminaires may be cut or punched through in order to provide a precise seating for the LED device on the board/base/gear tray of the LED luminaire. For example, the board/base/gear tray may comprise an aperture through which controls for the LED device can be accessed by a user.

The occupancy sensor can be connected to a pre-existing (pre-installed) LED luminaire. In other words, the present invention may be retrofitted into an existing lighting system. When the occupancy sensor detects the presence of a person, the occupancy sensor is triggered and optionally provides power to the LED driver to drive the LED luminaire. Optionally the occupancy sensor transfers power from e.g. a mains electrical connection to the LED luminaire. When the occupancy sensor is triggered and the LED luminaire is powered, the LED luminaire then provides full lighting levels to the local area. Advantageously, no bespoke driver, sensor, or additional switch lines are required ― no changes in the control system or lighting fixtures is necessary for use of the present invention. The low level lighting functionality is provided at a significantly reduced cost as a result.

Optionally the light source and the occupancy sensor are provided within a single housing. Advantageously, this allows the LED device to be retrofitted into fixtures where the light source and sensor have been located together.

Optionally the occupancy sensor and the light source are provided separately i.e. in separate housings. Advantageously, this allow the LED device to be retrofitted into fixtures where the light source and sensor have previously been separate.

Preferably the occupancy sensor is a high frequency sensor, but it can alternatively be any type of suitable sensor e.g. environmental sensor, audio sensor, RFID sensor, passive infrared (PIR) sensor, or the like. Optionally the occupancy sensor is a microwave sensor.

Optionally the light source comprises an LED module at least partially contained within a transparent, or a translucent, cover. For example, the cover may be partially spherically shaped.

Also according to the present invention there is provided a method of installing a light emitting diode device, the light emitting diode device comprising a light source comprising an LED module, and an occupancy sensor, the method comprising the steps of:
electrically connecting an occupancy sensor to at least one LED driver which is in turn electrically connect to at least one LED luminaire, such that the occupancy sensor controls the at least one LED luminaire in use; and
installing the light source such that the light source emits light at a constant level at all times, wherein the light emitted by the at least one LED luminaire is brighter than the light emitted by the LED module of the light source.

Optionally the method includes retrofitting the light emitting diode device into a pre-existing lighting system by connecting the occupancy sensor to a pre-existing (pre-installed) LED luminaire.

Optionally the method includes configuring the occupancy sensor to trigger upon detecting the presence of a person, such that the occupancy sensor then provides power to the LED driver to drive and thereby illuminate the LED luminaire. Optionally the occupancy sensor transfers power from e.g. a mains electrical connection to the LED luminaire.

The various aspects of the present invention can be practiced alone or in combination with one or more of the other aspects, as will be appreciated by those skilled in the relevant arts. The various aspects of the invention can optionally be provided in combination with one or more of the optional features of the other aspects of the invention. Also, optional features described in relation to one aspect can typically be combined alone or together with other features in different aspects of the invention. Any subject matter described in this specification can be combined with any other subject matter in the specification to form a novel combination.

Various aspects of the invention will now be described in detail with reference to the accompanying figures. Still, other aspects, features, and advantages of the present invention are readily apparent from the entire description thereof, including figures, which illustrates a number of exemplary aspects and implementations. The invention is also capable of other and different examples and aspects, and its several details can be modified in various respects, all without departing from the scope of the present invention as defined by the claims. Accordingly, each example herein should be understood to have broad application, and is meant to illustrate one possible way of carrying out the invention, without intending to suggest that the scope of this disclosure, including the claims, is limited to that example. Furthermore, the terminology and phraseology used herein is solely used for descriptive purposes and should not be construed as limiting in scope. In particular, unless otherwise stated, dimensions and numerical values included herein are presented as examples illustrating one possible aspect of the claimed subject matter, without limiting the disclosure to the particular dimensions or values recited. All numerical values in this disclosure are understood as being modified by "about". All singular forms of elements, or any other components described herein are understood to include plural forms thereof and vice versa.

Language such as "including", "comprising", "having", "containing", or "involving" and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes. Thus, throughout the specification and claims unless the context requires otherwise, the word "comprises" or "comprising" will be understood to imply the inclusion of a stated integer or group of integers but not the exclusion of any other integer or group of integers.

Any discussion of documents, acts, materials, devices, articles and the like is included in the specification solely for the purpose of providing a context for the present invention. It is not suggested or represented that any or all these matters formed part of the prior art base of were common general knowledge in the field relevant to the present invention.

In this disclosure, whenever a composition, an element or a group of elements is preceded with the transitional phrase "comprising", it is understood that we also contemplate the same composition, element or group of elements with transitional phrases "consisting essentially of", "consisting", "selected from the group of consisting of", "including", or "is" preceding the recitation of the composition, element or group of elements and vice versa. In this disclosure, the words "typically" or "optionally" are to be understood as being intended to indicate optional or non-essential features of the invention which are present in certain examples but which can be omitted in others without departing from the scope of the invention.

References to directional and positional descriptions such as upper and lower end directions are to be interpreted by a skilled reader in the context of the examples described to refer to the orientation of features shown in the drawings, and are not to be interpreted as limiting the invention to the literal interpretation of the term, but instead should be as understood by the skilled addressee.

### BRIEF DESCRIPTION OF THE DRAWINGS

In the accompanying drawings:
Figure 1 is a perspective view of an LED device comprising a combined occupancy sensor, LED driver, and light source in a single housing in accordance with an example of the invention;
Figure 2 is a side view of the LED device of Figure 1;
Figure 3 is an alternative schematic perspective view of the LED device of Figure 1;
Figure 4 is a schematic top view of the device of Figure 1;
Figure 5 is a schematic side view of the device of Figure 1;
Figure 6 is a schematic front view of the device of Figure 1;
Figure 7 is a schematic side view of the device of Figure 1;
Figure 8 is a schematic base view of the device of Figure 1;
Figure 9 is a schematic circuit diagram showing the wiring between the LED driver and the sensor for the device of Figure 1;
Figures 10-15 are schematic illustrations of an alternative example of an LED device comprising a combined occupancy sensor, LED driver, and light source in a single housing in accordance with the invention;
Figure 16 is a perspective view of an LED device comprising an LED driver and occupancy sensor in a single housing, and a separable light source in accordance with an example of the invention;
Figure 17 is a side view of the LED device of Figure 16;
Figure 18 is an alternative schematic perspective view of the LED device of Figure 16;
Figure 19 is a schematic top view of the device of Figure 16;
Figure 20 is a schematic side view of the device of Figure 16;
Figure 21 is a schematic front view of the device of Figure 16;
Figure 22 is a schematic side view of the device of Figure 16;
Figure 23 is a schematic base view of the device of Figure 16;
Figure 24 is a schematic circuit diagram showing the wiring between the LED driver and the sensor for the device of Figure 16;
Figures 25-28 are schematic illustrations of an alternative example of an LED device comprising an LED driver and occupancy sensor in a single housing, and a separable light source in accordance with an example of the invention; and
Figures 29 and 30 are illustrations of an LED device installed on a gear tray;
Figure 31 is an illustration of an LED device installed in pre-existing space within a pre-installed LED luminaire;
Figure 32 is an illustration of an LED device installed on the board of a pre-installed LED luminaire with apertures cut through the board for seating of the device and access to the controls;
Figure 33 is a side view of the LED luminaire of Figure 32;
Figure 34 is a close-up view of a section of Figure 32 showing the LED device controls;
Figure 35 is a perspective view of a further LED device comprising a combined occupancy sensor, LED driver, and light source in a single housing in accordance with an example of the invention;
Figure 36 is a perspective view of a further LED device comprising an LED driver and occupancy sensor in a single housing, and a separable light source in accordance with an example of the invention;
Figures 37-39 are schematic illustrations of the LED device of Figure 35;
Figures 40-42 are schematic illustrations of the LED device of Figure 36;
Figure 43 is an illustration of an LED luminaire comprising an LED device in accordance with the invention and illuminated by the light source of the LED device; and
Figure 44 is an illustration of the LED luminaire of Figure 43 where the LED luminaire is fully illuminated.

### DETAILED DESCRIPTION OF EXAMPLES OF THE INVENTION

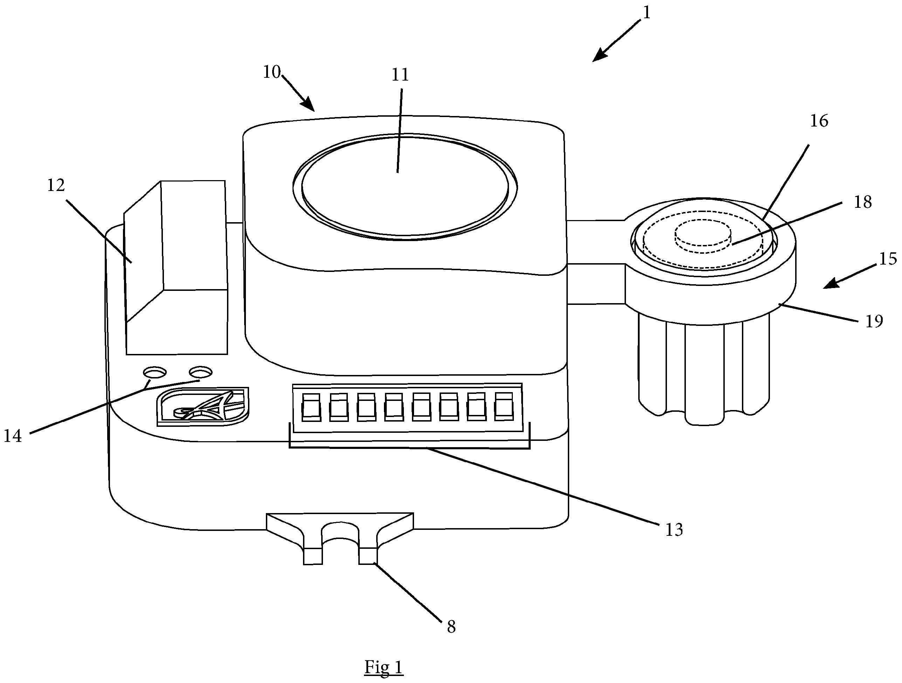

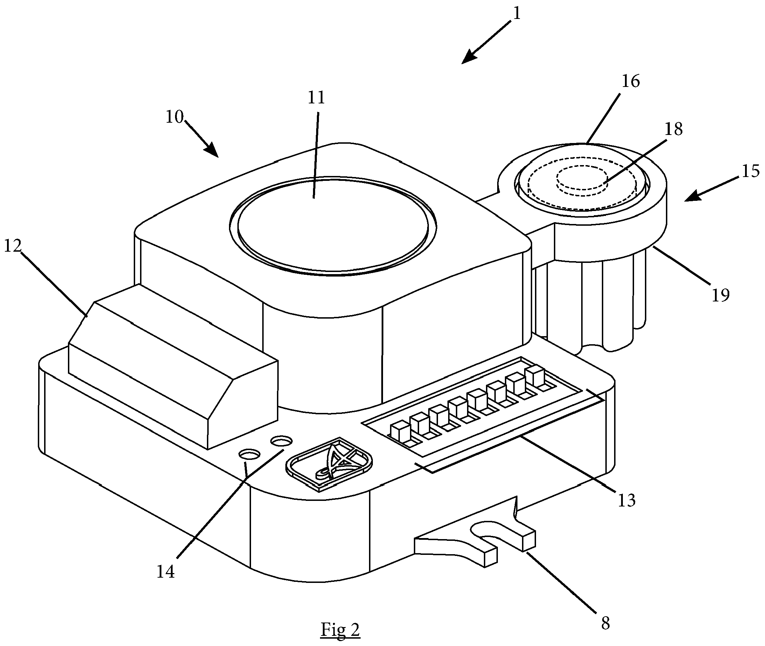

Figures 1-9 show a combined lighting device and sensor 1. In this example, the components of the device 1 are contained in one housing, comprising a main body 10 that contains the sensor 11 and the LED driver components, and an extension 19 that holds the light source 15.

The lighting device 1 can be connected into existing fittings where the location of the existing fitting is a suitable location for the light source 15 to be positioned. The light source 15 contains an LED module 18 within a translucent dome or lens/reflector 16 that is configured to light at a relatively low level, for example 400-500 Im. The LED module 18 is lit at all times, so that a low level lighting functionality is provided at all times by the light source 15 regardless of whether motion is detected by the sensor 11. For example, an individual exiting a stairwell or an elevator into a corridor of a residential or commercial building with no natural light will not be entering a completely dark environment with a delay in lighting dependent on detection by the motion sensor. Additionally, the permanent corridor function of the invention reduces the risk of, for example, hazards being present and undetectable within the otherwise darkened area.

The sensor 11 can be any suitable sensor. In this example, a microwave sensor 11 is illustrated. The microwave sensor is configured to emit microwaves, which are reflected with a certain echo pattern. The sensor 11 detects the returned echo, analyses the echo pattern, and is triggered when movement changes the echo pattern that the sensor 11 is detecting. When the sensor 11 is triggered, i.e. when the sensor 11 detects motion, it activates the LED driver 30 which powers the LED light fixture (not shown) so that the LED light fixture lights up.

As shown in Figures 1-9, main body 10 also comprises a terminal point 12, LED indicators 14 which provide a visual indicator of the activity status of the microwave sensor (active/inactive) and power status within the main body 10, and control switches 13. The control switches 13 can be adjusted by a user to set the required parameters of the sensor 11. For example, the control switches 13 could be used to set the detection range/area of the sensor and the length of time that the LED light fixture remains lit after motion is last detected. The main body 10 also has fixings 8 which permit attachment of the lighting device 1 to e.g. a gear tray using clips, screws, bolts or any other suitable fixing means.

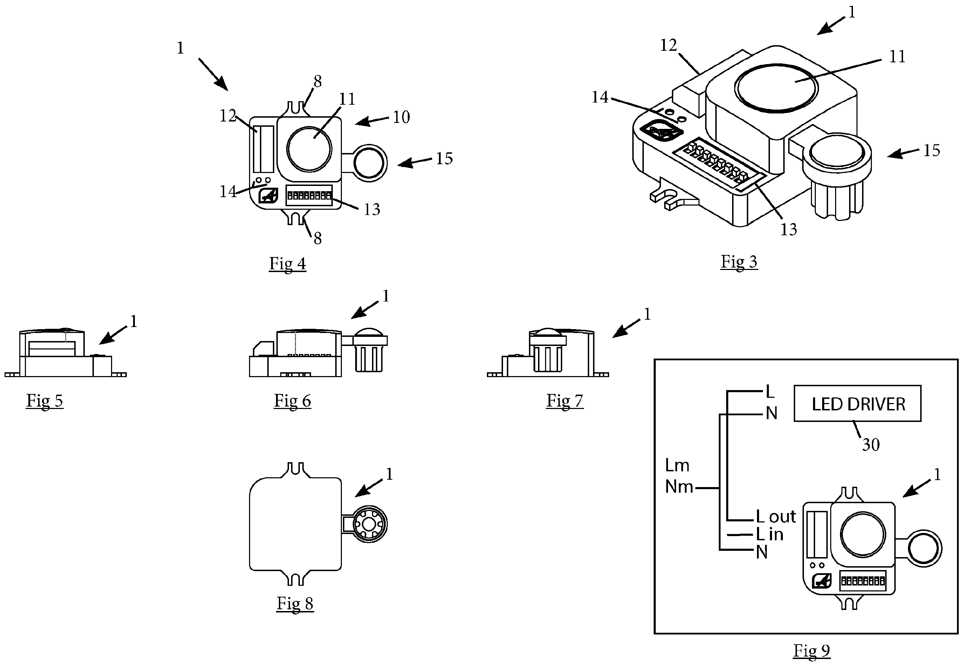

Figure 9 shows an example circuit schematic for the lighting device 1, connected to an LED driver 30. Mains live Lₘ is fed into the lighting device 1. Mains neutral Nₘ is connected to both the LED driver 30 and the lighting device 1. The lighting device 1 provides power to the LED driver 30 (and subsequently to the LED light fixture) via line Lₒᵤₜ, which is powered when the sensor 11 is triggered. Other suitable configurations of connections may be used, for example where a plurality of lighting devices 1 are networked together. This may be useful when, for example, it is desirable to have multiple LED light fixtures activating simultaneously when motion is detected by one sensor 11 in a master-slave configuration.

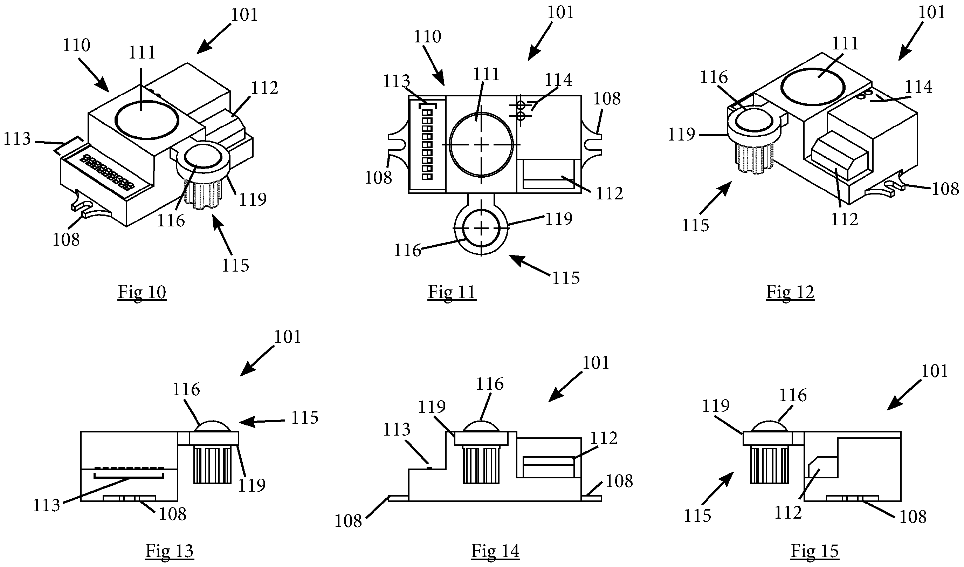

Figures 10-15 show a further example of a combined lighting device and sensor 101, where common features have been given the same reference numerals as Figures 1-9, increased by 100. In this example there is shown a different configuration of the terminal point 112, the control switches 113, and the LED indicators 114. The features of the combined lighting device and sensor 101 otherwise remain as described above and for brevity, will not be repeated.

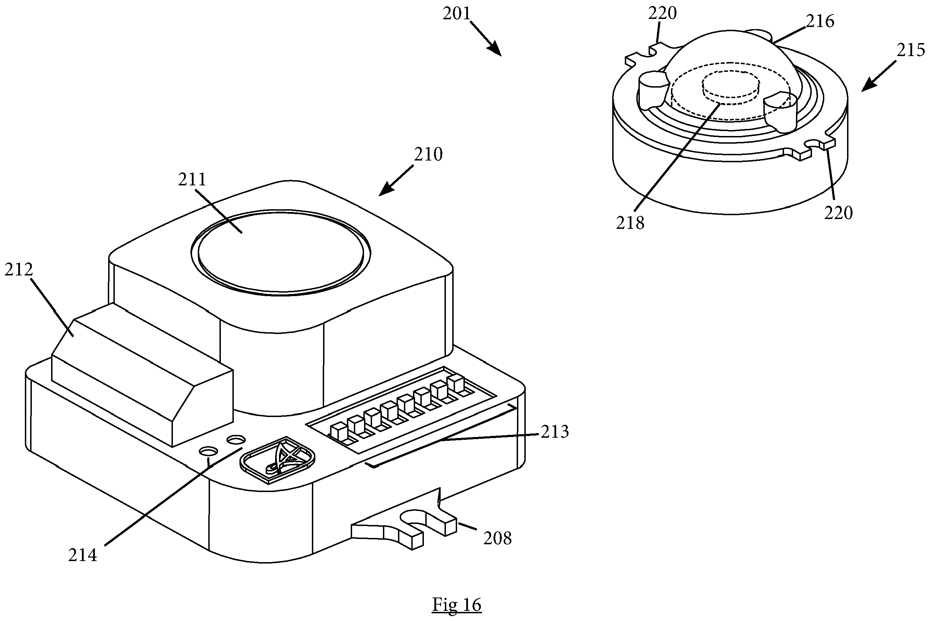

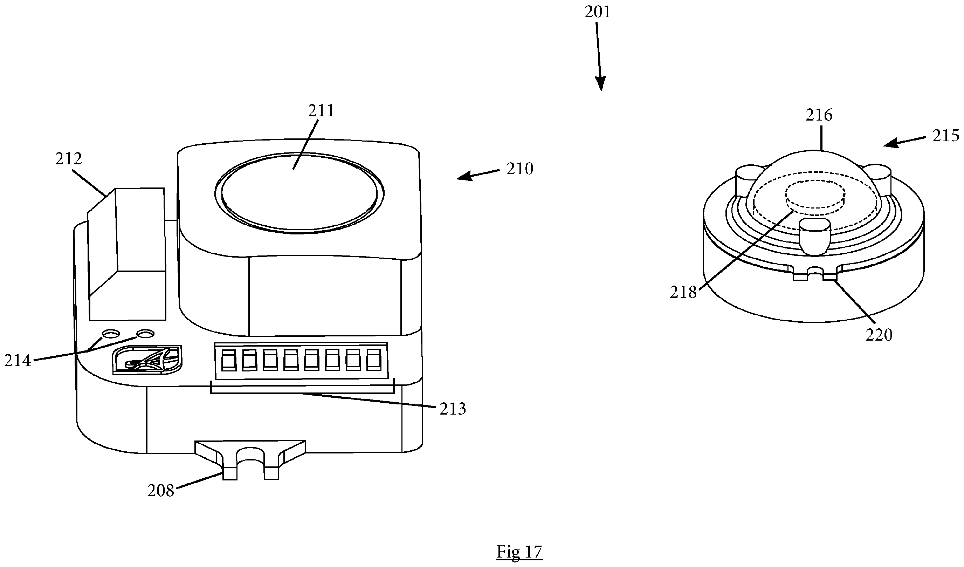

Figures 16-24 show an alternative arrangement of the lighting device 201. In this example, the main body of the sensor 210 and the light source 215 are not housed together. This allows increased flexibility of the positioning of the light source 215 relative to the sensor 211, for example where the sensor 211 may be most efficiently positioned in one location in order to best detect motion (e.g. on a ceiling or the like), but the lighting provided by the corridor function is more optimally located elsewhere (e.g. closer to the floor). As the light source 215 is constantly lit regardless of the status of the sensor 211, no connection between the two is necessarily required, and the light source 215 merely requires a suitable power supply.

The light source 215 comprises an LED module 218 within a translucent dome 216 that is configured to light at a relatively low level, for example 400-500 Im. The LED module 218 is lit at all times, so that a corridor function is provided at all times by the light source 215 regardless of whether motion is detected by the corresponding sensor 211. The light source 215 also comprises fittings 220 which allow the light source 215 to be attached to e.g. a gear tray or another fixture using clips, screws, bolts, or the like, such that the light source 215 is secured in position.

The sensor 211 and the corresponding main body 210 are substantially as previously described. The sensor 211 is, in this example, a microwave sensor. The main body 210 comprises fixings 208, a terminal point 212, control switches 213, and LED indicators 214 as described above.

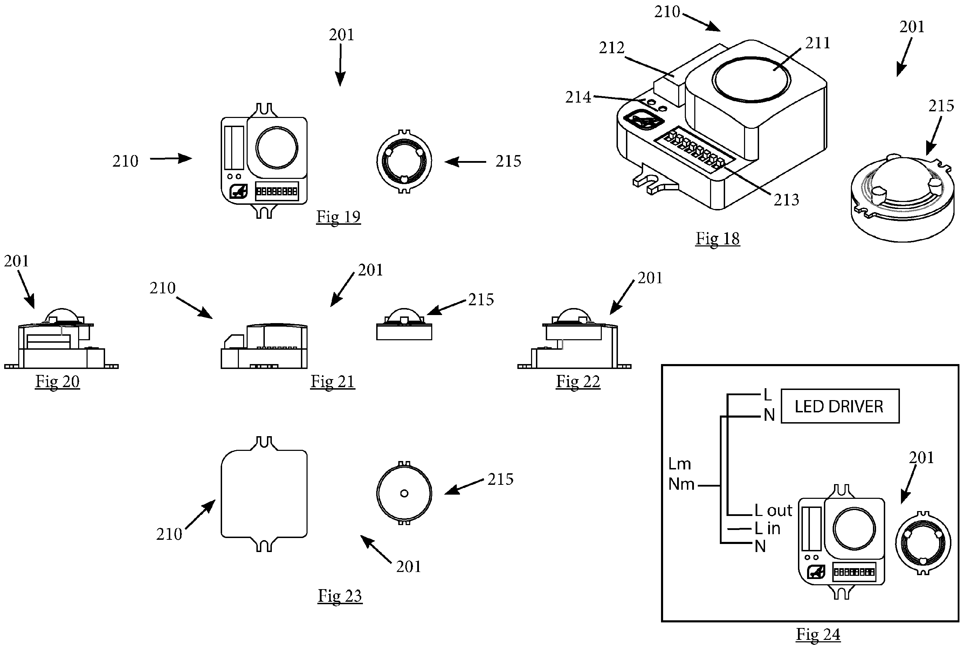

Figure 24 shows an example circuit schematic for the lighting device 201, connected to an LED driver 230 and substantially as described in relation to Figure 9 above. For brevity, the features of this circuit will not be repeated.

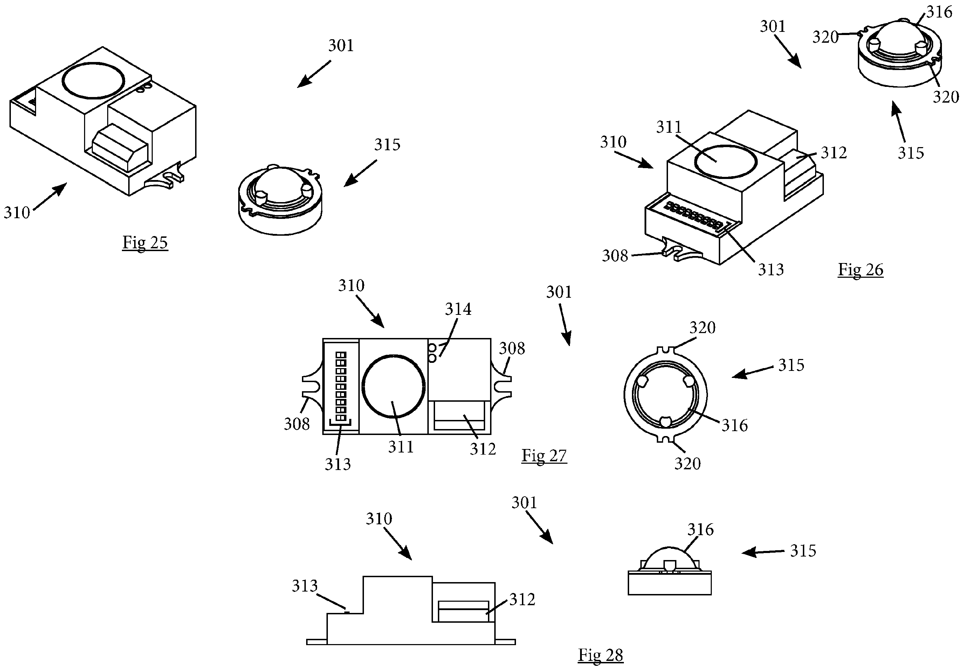

Figures 25-28 show an alternative example of the lighting device 301 with a separate light source 215 and main body 310. The light source 315 is substantially as described in relation to Figures 16-24, with an LED module (not shown) within a translucent dome 316. In this example, the main body 310 containing the sensor 311 comprises a different configuration of the terminal point 312, the control switches 313, and the LED indicators 314. The features of the separate lighting device and sensor 301 otherwise remain as previously described.

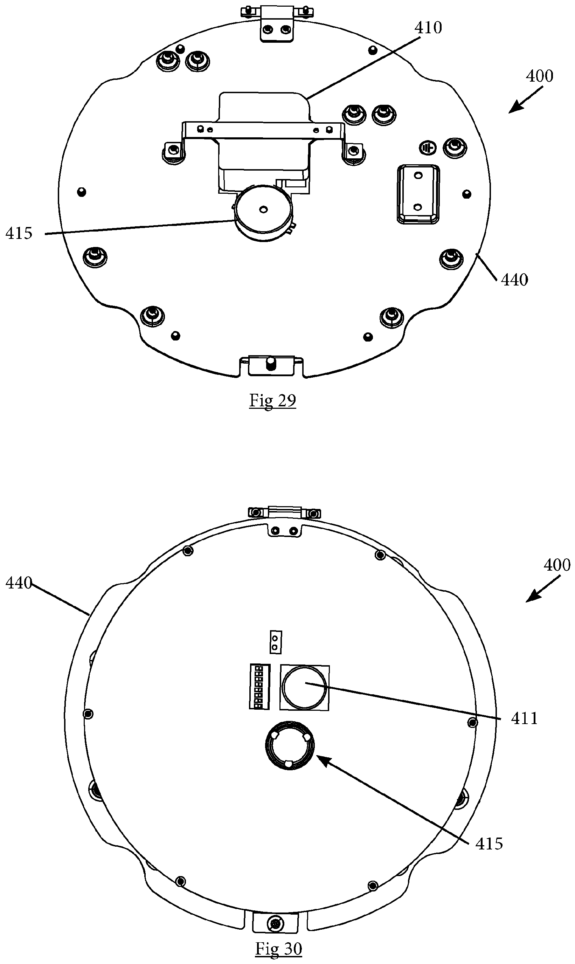

Figures 29 and 30 show an example of a gear tray assembly 400 that comprises a gear tray 440 with a combined lighting device and sensor 401 attached. Main body 410 comprises a microwave sensor 411 which is exposed on the gear tray in order to facilitate motion sensing. The light source 415 is positioned adjacent to the main body 410/sensor 411 as in e.g. Figures 1-9, and is affixed to the gear tray 440 so that the light source 415 is pointing in the same direction as the sensor 411.

Other alternative examples of the invention may be mounted to a gear tray, for example where the light source (215, 315) and the sensor (211, 311) are provided separately to each other, the sensor (211, 311) may be mounted to a gear tray while the light source (215, 315) is affixed elsewhere.

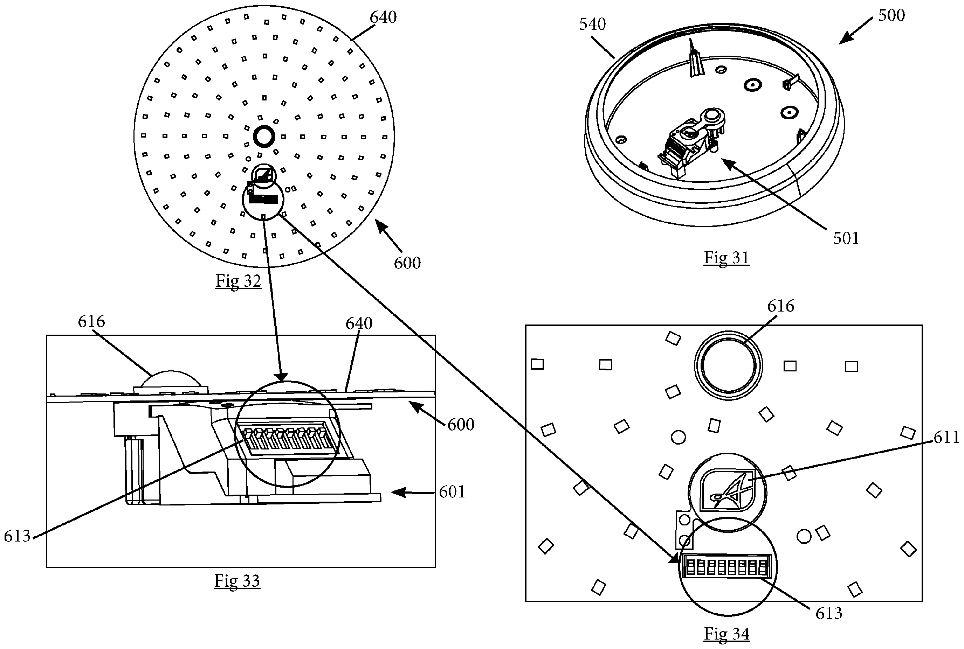

Figure 31 shows an example of an LED luminaire base assembly 500 that comprises a base 540 with a combined lighting device and sensor 501 attached, as previously described.

Figure 32 shows an example of an LED luminaire board assembly 600 comprising a board 640 and a combined lighting device and sensor 601 mounted to the board 640. Apertures have been punched through the board 640 as seen in Figure 34, so that the light source 616 extends through the board 640 to the side opposite that on which the combined lighting device and sensor 601 are mounted, as can be seen in

Figures 33 and 34. The occupancy sensor 611 is also seated just above a further aperture to allow detection of an occupant. The controls 613 of the combined lighting device and sensor 601 are accessible through an aperture so that a user can perform adjustments easily. The apertures allow precise seating of the combined lighting device and sensor 601 on the board 640.

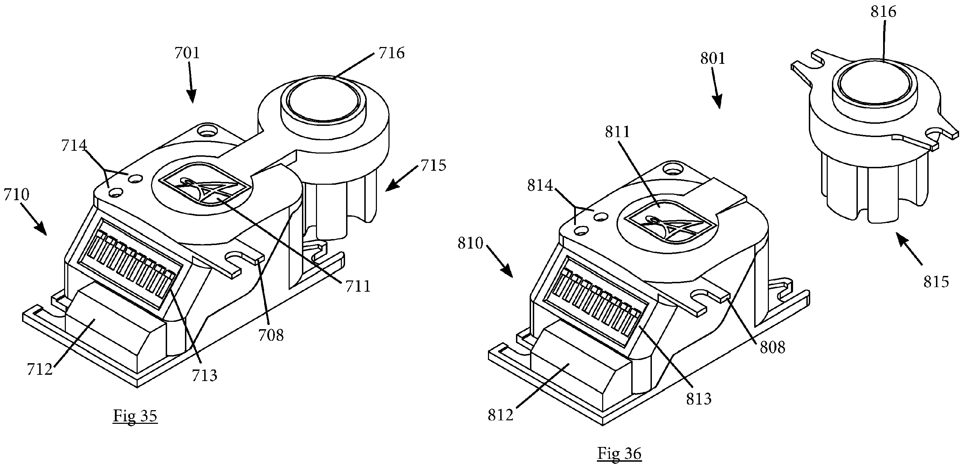

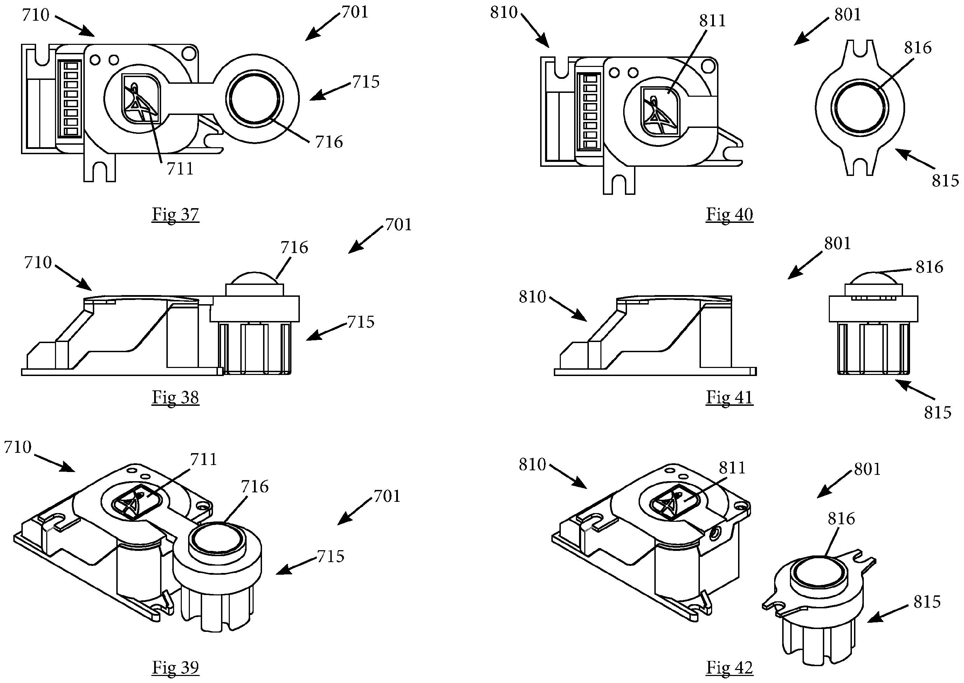

Figure 35 is a perspective view of an alternative example of the combined lighting device and sensor of the invention. The components are as previously described and the numbering of features has been retained, but are now prefaced by 7 (e.g. 101 is now 701, etc.). Figures 37-39 are schematic views of the example shown in Figure 35.

Figure 36 is a perspective view of an alternative example of the alternative arrangement of the lighting device 801. In this example, the main body of the sensor 810 and the light source 815 are not housed together, in a similar manner to the examples shown in Figures 16-23. The components are as previously described and the numbering of features has been retained, but are now prefaced by 8 (e.g. 201 is now 801, etc.). Figures 40-42 are schematic views of the example shown in Figure 36.

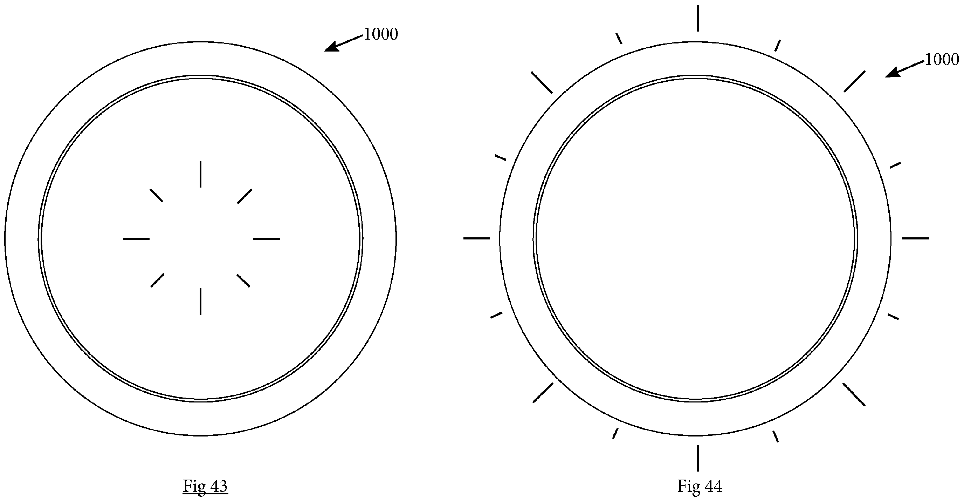

Figure 43 is an example of an LED luminaire 1000 comprising an LED device in accordance with the invention. The LED luminaire is lit by the light source of the LED device, providing a lower-level, constant illumination. Figure 44 shows the LED luminaire 1000 after the occupancy sensor has been triggered and the LED luminaire is fully illuminated.

It will be appreciated by persons skilled in the art that the above embodiments have been described by way of example only and not in any limitative sense, and that various alterations and modifications are possible without departing from the scope of the invention as defined in the claims.

## Claims

1. A light emitting diode (LED) device comprising:
at least one light source comprising an LED module; and
an occupancy sensor;
wherein, in use, the light source emits light at a constant level at all times; and
wherein the occupancy sensor is configured to be electrically connected to at least one LED driver which is in turn electrically connected to at least one LED luminaire, and the occupancy sensor is thereby configured to control the at least one LED luminaire in use; and
wherein the light emitted by the at least one LED luminaire is brighter than the light emitted by the LED module of the light source.

2. A light emitting diode device as claimed in claim 1, wherein the LED device comprises a single LED or a plurality of LEDs connected in a circuit.

3. A light emitting diode device as claimed in claim 1 or claim 2, wherein the occupancy sensor is connectable to a pre-installed LED luminaire such that the light emitting diode device is retrofittable into a pre-existing lighting system.

4. A light emitting diode device as claimed in claims 1-3, wherein the occupancy sensor comprises one or more of a high frequency sensor, a microwave sensor, and a passive infrared sensor.

5. A light emitting diode device as claimed in claims 1-4, wherein the LED module is at least partially contained within a transparent, or a translucent, cover.

6. A light emitting diode device as claimed in claims 1-5, wherein the light source and the occupancy sensor are provided within a single housing.

7. A light emitting diode device as claimed in claims 1-5, wherein the light source and the occupancy sensor are provided within separate housings.

8. A light emitting diode device as claimed in claims 1-7, wherein when the occupancy sensor detects the presence or absence of a person, the occupancy sensor is triggered and provides power to the LED driver to drive, and thereby illuminate, the LED luminaire.

9. A method of installing a light emitting diode device, the light emitting diode device comprising a light source comprising an LED module, and an occupancy sensor, the method comprising the steps of:
electrically connecting an occupancy sensor to at least one LED driver which is in turn electrically connect to at least one LED luminaire, such that the occupancy sensor controls the at least one LED luminaire in use; and
installing the light source such that the light source emits light at a constant level at all times, wherein the light emitted by the at least one LED luminaire is brighter than the light emitted by the LED module of the light source.

10. The method as claimed in claim 9, comprising retrofitting the light emitting diode device into a pre-existing lighting system by connecting the occupancy sensor to a pre-installed LED luminaire.

11. The method as claimed in claim 9 or claim 10, wherein the occupancy sensor comprises one or more of a high frequency sensor, a microwave sensor, and a passive infrared sensor.

12. The method as claimed in claims 9-11, including configuring the occupancy sensor to trigger upon detecting the presence of a person, such that the occupancy sensor then provides power to the LED driver to drive and thereby illuminate the LED luminaire.
